# EUROPEAN PATENT SPECIFICATION

(11) **EP 4 079 505 B1**
(45) Date of publication and mention of the grant of the patent: **17.04.2024**
(21) Application number: 21189688.1
(22) Date of filing: 04.08.2021
(51) Int. Cl.: B32B 3/30, B32B 13/02, B32B 27/32, E02D 31/02, E04B 1/66, B32B 7/12

(54) **BELOW GRADE, BLIND SIDE, WATERPROOFING SHEET MEMBRANE WITH ADHESIVE AND HAVING MODERATE REFLECTIVITY GRANULAR PARTICLE LAYER TO FULLY BOND TO CONCRETE/SHOTCRETE, AND A METHOD OF MAKING, AND USING SAME**
WASSERABDICHTENDE MEMBRANFOLIE MIT KLEBSTOFF UND SCHICHT AUS KÖRNIGEN PARTIKELN MIT MITTLERER REFLEKTIVITÄT VOLLSTÄNDIG VERBUNDEN MIT BETON/SPRITZBETON ZUR ABDICHTUNG VON UNTERFUNDAMENTEN UND VERDECKTEN SEITEN UND VERFAHREN ZUR HERSTELLUNG UND VERWENDUNG DAVON
MEMBRANE EN FEUILLE D'IMPERMÉABILISATION DES SOUS-FONDATIONS ET DES CÔTÉS CACHÉS AVEC UNE COUCHE DE PARTICULES GRANULAIRES ADHÉSIVES ET HAUTEMENT RÉFLÉCHISSANTES POUR UNE LIAISON COMPLÈTE À DU BÉTON OU DE LA GUNITE, ET PROCÉDÉ DE FABRICATION ET D`UTILISATION

(30) Priority: 21.04.2021 US 202117236988
(43) Date of publication of application: 26.10.2022
(73) Proprietor: Rudyan, Amir, Canoga Park, CA 91304 (US)
(72) Inventor: Rudyan, Amir, Canoga Park, CA 91304 (US)
(74) Representative: Kuhnen & Wacker Patent- und Rechtsanwaltsbüro PartG mbB

(56) References cited:
- CN-A- 110 820 810
- CN-B- 103 625 077
- CN-U- 202 755 985
- US-A1- 2020 240 101
- US-B2- 10 655 322

## Description

### FIELD OF THE INVENTION

The present invention relates generally to a below grade, blind side, waterproofing sheet membrane with adhesive and moderate reflectivity granular particle layer to fully bond to concrete/shotcrete, and a method of making, and using same. More particularly, the invention encompasses a below grade, blind side, waterproofing sheet membrane with adhesive, and having at least one layer of moderate reflectivity granular particle layer that are fully or partly embedded into the adhesive layer, and where the average reflectivity of the exposed granular particles is between 35 percent reflectivity to below 55 percent reflectivity on a standard reflectivity scale. The innovative moderate reflectivity granular particle layer system that is securely bonded to concrete or shotcrete can be used along a wall, a floor, a ceiling, or along any structure which requires water or moisture proofing. The invention can be most effectively used between a concrete or shotcrete layer and the surrounding earth, such as, along an area that has a high water table, or a constant hydrostatic pressure, or high ground moisture, that may creep into a foundation or a wall. The inventive waterproofing layer having the waterproofing sheet membrane, and an adhesive layer having embedded therein with moderate reflectivity granular particles can be used in any building or wall construction, and can be placed under or around a foundation of a building or dwelling or on its below grade blind side retaining walls, etc.

### BACKGROUND INFORMATION

Water or moisture penetration into a structure has have been known in the water proofing industry for many years, and the water proofing industry has addressed this well-known problem in a variety of ways, and which are well known to the people skilled in the art.

US Patent No. 8,453,405, to Robert A. Wiercisnki, et al. discloses a waterproofing membrane that bonds to concrete cast against it (i.e., post-cast concrete). The membrane includes a flexible carrier sheet, a pressure sensitive adhesive and reflective particles on the surface of the adhesive. The reflective particles should have an average diameter equal to or greater than the thickness of the pressure sensitive adhesive. Preferably, the reflective particles are ground white cement, ground hydrated white cement, ground partially-hydrated white cement or a mixture of two or more of these. The membrane does not have a removable release sheet that is typically used to prevent the adhesive portion of the membrane from adhering to the carrier sheet or other portion of the membrane when the membrane is rolled up.

US Patent No. 8,713,879, to Robert A. Wiercisnki, et al. discloses a waterproofing membrane that bonds to concrete cast against it (i.e., post-cast concrete). The membrane includes a flexible carrier sheet, a pressure sensitive adhesive, and reflective particles on the surface of the adhesive. The reflective particles should have an average diameter equal to or greater than the thickness of the pressure sensitive adhesive. Preferably, the reflective particles are ground white cement or ground white hydrated cement. The membrane does not have a removable release sheet that is typically used to prevent the adhesive portion of the membrane from adhering to the carrier sheet or other portion of the membrane when the membrane is rolled up.

US Patent No. 8,793,862 to Ulrich K. Weber, et al. discloses a sealant which is arranged in a meshlike manner between a composite layer and a barrier layer in a water-tight membrane that includes a barrier layer and a composite layer. In the case of a leak in the barrier layer, the network of sealant between the composite layer and the barrier layer prevents the barrier layer from being affected. As a result, the size of the areas affected by penetrating water is limited. The damage by the penetrating water is thus limited to a smaller area, and the point of damage can thus be more easily localized.

US Patent No. 10,655,322, to Huhe Chen, et al. discloses a waterproofing membrane which does not require a removable release sheet but which nevertheless bonds to post-cast concrete and facilitates water-tight sealing at membrane-to-membrane overlaps. The waterproofing membrane comprises a carrier and pressure-sensitive adhesive (PSA) layers, an inorganic particle layer having particulate bodies which are partially embedded in the PSA and which have an average particle size less than the average thickness of the PSA layer, and an anti-submarining nano-silica-containing coating layer attached to un-embedded portions of the inorganic particles to prevent total embedding into the PSA when the membrane is rolled or unrolled, whereby water-tight seams are facilitated between overlapped portions of adjacently installed waterproofing membranes, and whereby the water-tight seam is achieved preferably using only detailing or waterproofing tape and without the additional use of a liquid primer, mastic, or other coating.

US 10655322 B2 and CN 103625077B disclose a waterproof membrane comprising an adhesive layer and a high reflectivity granular particle layer for post-cast concrete applications.

However, this invention improves on the deficiencies of the prior art and provides an inventive below grade, blind side, waterproofing sheet membrane with adhesive and moderate reflectivity granular particle layer to fully bond to concrete/shotcrete, and a method of making, and using same.

### PURPOSES AND SUMMARY OF THE INVENTION

The invention is a novel below grade, blind side, waterproofing sheet membrane with adhesive and moderate reflectivity granular particle layer to fully bond to concrete/shotcrete, and a method of making, and using same.

Therefore, one purpose of this invention is to provide an inventive waterproofing layer having a waterproofing sheet membrane, and an adhesive layer having embedded therein and having moderate reflectivity granular particles embedded therein.

Another purpose of this invention is to provide a novel below grade, blind side, waterproofing sheet membrane with adhesive and moderate reflectivity granular particle layer to fully bond to concrete/shotcrete, and a method of making, and using same, and wherein reflectivity of the at least one layer of at least one moderate reflectivity granular particle layer is between 35 percent reflectivity to below 55 percent reflectivity.

Yet another purpose of this invention is to provide a novel below grade, blind side, waterproofing sheet membrane with adhesive and moderate reflectivity granular particle layer to fully bond to concrete/shotcrete, and a method of making, and using same, and wherein the inventive waterproofing layer having a waterproofing sheet membrane, and an adhesive layer having embedded therein and having moderate reflectivity granular particles embedded therein has dual release liners or sheets protecting a first adhesive layer, and a second adhesive layer.

Still yet another purpose of this invention is to provide a novel below grade, blind side, waterproofing sheet membrane with adhesive and moderate reflectivity granular particle layer to fully bond to concrete/shotcrete, and a method of making, and using same, and wherein the inventive waterproofing layer having a waterproofing sheet membrane, and an adhesive layer having embedded therein and having moderate reflectivity granular particles embedded therein has dual release liners or sheets protecting a first adhesive layer, and a second adhesive layer, and where a first release liner or sheet protects the first adhesive layer which is on the first or top or upper portion of the inventive waterproofing layer having a waterproofing sheet membrane, and an adhesive layer having embedded therein and having moderate reflectivity granular particles embedded therein, and a second release liner or sheet protects the second adhesive layer which is on the second or bottom or lower portion of the inventive waterproofing layer having a waterproofing sheet membrane, and an adhesive layer having embedded therein and having moderate reflectivity granular particles embedded therein.

Still yet another purpose of this invention is to provide at least one waterproof barrier layer having moderate reflectivity granular particles embedded therein via at least one adhesive to form a bond with a concrete or shotcrete layer.

Therefore, in one aspect this invention comprises a below grade, blind side, waterproofing sheet membrane with adhesive and moderate reflectivity granular particle layer to fully bond to concrete/shotcrete, comprising:
(a) at least one sheet membrane having a first membrane surface, and a second membrane surface;
(b) at least one first adhesive layer having a first adhesive surface, and a second adhesive surface, and wherein said second adhesive surface is in secure contact with at least a portion of said first membrane surface; and
(c) at least one layer of at least one moderate reflectivity granular particle layer, having a first particle layer surface, and a second particle layer surface, and wherein said second particle layer surface is in secure contact with at least a portion of said first adhesive surface, and wherein reflectivity of said at least one layer of at least one moderate reflectivity granular particle layer is between 35 percent reflectivity to below 55 percent reflectivity.

In another aspect this invention comprises a method of forming a below grade, blind side, waterproofing sheet membrane with adhesive and moderate reflectivity granular particle layer to fully bond to concrete/shotcrete, comprising the steps of:
(a) taking at least one sheet membrane having a first membrane surface, and a second membrane surface;
(b) applying at least one first adhesive layer having a first adhesive surface, and a second adhesive surface, onto said at least one sheet membrane, and wherein said second adhesive surface is in secure contact with at least a portion of said first membrane surface; and
(c) applying at least one layer of at least one moderate reflectivity granular particle layer, having a first particle layer surface, and a second particle layer surface, over at least a portion of said at least one first adhesive layer, and wherein said second particle layer surface is in secure contact with at least a portion of said first adhesive surface, and wherein reflectivity of said at least one layer of at least one moderate reflectivity granular particle layer is between 35 percent reflectivity to below 55 percent reflectivity.

In yet another aspect this invention comprises a method of forming a below grade, blind side, waterproofing sheet membrane with adhesive and moderate reflectivity granular particle layer to fully bond to concrete/shotcrete, comprising the steps of:
(a) taking the waterproofing sheet membrane with adhesive and moderate reflectivity granular particle layer of this invention, and placing it against at least one structure, such that said second membrane surface of said at least one sheet membrane is in physical contact with said at least one structure, and wherein said first particle layer surface of said at least one layer of at least one moderate reflectivity granular particle layer is exposed; and
(b) applying at least one layer of one of concrete and shotcrete over at least a portion of said first particle layer surface of said at least one layer of at least one moderate reflectivity granular particle layer.

### BRIEF DESCRIPTION OF THE DRAWINGS

Figure 1, illustrates a first embodiment of the inventive below grade, blind side, waterproofing sheet membrane with adhesive and moderate reflectivity granular particle layer to fully bond to concrete/shotcrete.
Figure 2, illustrates a second embodiment of the inventive below grade, blind side, waterproofing sheet membrane with adhesive and moderate reflectivity granular particle layer to fully bond to concrete/shotcrete.
Figure 3, illustrates a third embodiment of the inventive below grade, blind side, waterproofing sheet membrane with adhesive and moderate reflectivity granular particle layer to fully bond to concrete/shotcrete.
Figure 4, illustrates a fourth embodiment of the inventive below grade, blind side, waterproofing sheet membrane with adhesive and moderate reflectivity granular particle layer to fully bond to concrete/shotcrete.
Figure 5, illustrates a fifth embodiment of the inventive below grade, blind side, waterproofing sheet membrane with adhesive and moderate reflectivity granular particle layer to fully bond to concrete/shotcrete.
Figure 6, illustrates a sixth embodiment of the inventive below grade, blind side, waterproofing sheet membrane with adhesive and moderate reflectivity granular particle layer to fully bond to concrete/shotcrete.
Figure 7, illustrates a seventh embodiment of the inventive below grade, blind side, waterproofing sheet membrane with adhesive and moderate reflectivity granular particle layer to fully bond to concrete/shotcrete.
Figure 8, illustrates a eight embodiment of the inventive below grade, blind side, waterproofing sheet membrane with adhesive and moderate reflectivity granular particle layer to fully bond to concrete/shotcrete.
Figure 9, illustrates a ninth embodiment of the inventive below grade, blind side, waterproofing sheet membrane with adhesive and moderate reflectivity granular particle layer to fully bond to concrete/shotcrete.
Figure 10, illustrates a tenth embodiment of the inventive below grade, blind side, waterproofing sheet membrane with adhesive and moderate reflectivity granular particle layer to fully bond to concrete/shotcrete.
Figure 11, illustrates a eleventh embodiment of the inventive below grade, blind side, waterproofing sheet membrane with adhesive and moderate reflectivity granular particle layer to fully bond to concrete/shotcrete.
Figure 12, illustrates a twelfth embodiment of the inventive below grade, blind side, waterproofing sheet membrane with adhesive and moderate reflectivity granular particle layer to fully bond to concrete/shotcrete.

### DETAILED DESCRIPTION

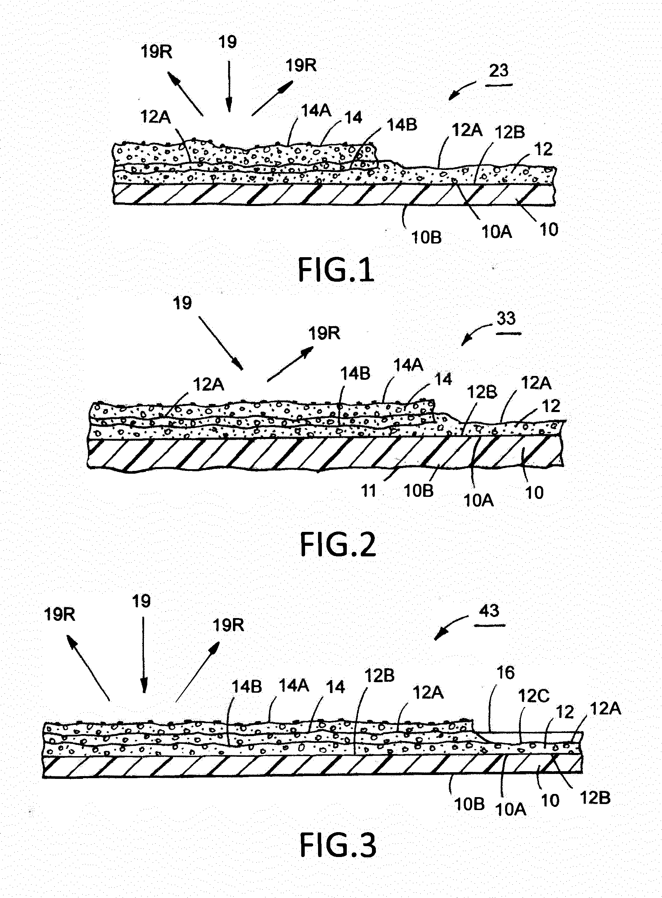

The inventive below grade, blind side, waterproofing sheet membrane with adhesive and moderate reflectivity granular particle layer to fully bond to concrete/shotcrete, and a method of making, and using same will now be discussed with reference to Figures 1 through 12. These drawings are for illustration purposes only and are not drawn to scale. Like numbers represent like features and components in the drawings.

In summary the invention is a below grade, blind side, waterproofing sheet membrane with adhesive and moderate reflectivity granular particle layer to fully bond to concrete/shotcrete, and a method of making, and using same in a building or wall construction, and placing it under and around a foundation of a building or dwelling or on its below grade blind side retaining walls, etc.

Figure 1, illustrates a first embodiment of the inventive below grade, blind side, waterproofing sheet membrane with adhesive and moderate reflectivity granular particle layer to fully bond to concrete/shotcrete 23, where the sheet membrane or layer 10, having a first or top or upper surface 10A, and a second or lower or bottom surface 10B, has secured thereto at least one layer of at least one first adhesive 12, such that the first adhesive layer 12, has a first or top or upper surface 12A, and a second or lower or bottom surface 12B, and wherein the first surface 10A, of the sheet membrane 10, is in secure contact with the second surface 12B, of the first adhesive layer 12. At least one layer of at least one moderate reflectivity granular particle layer 14, having a first or top or upper surface 14A, and a second or lower or bottom surface 14B, is in secure contact with the first adhesive layer 12, such that the first surface 12A, of the first adhesive layer 12, is in secure contact with the second surface 14B, of the at least one moderate reflectivity granular particle layer 14, and this combination forms the inventive waterproofing sheet membrane with adhesive and moderate reflectivity granular particle layer 23. For some applications portions of the at least one moderate reflectivity granular particle layer 14, could be partially or fully embedded within the at least one first adhesive layer 12. Similarly, for some applications the second surface 14B, of the at least one moderate reflectivity granular particle layer 14, could be below the planar surface of the first surface 12A, of the at least one first adhesive layer 12. The sheet membrane 10, can be made from a material 10, selected from a group comprising a high-density polyethylene (HDPE) material, a thermoplastic polyolefin (TPO) material, and combinations thereof, to name a few. The thickness of the sheet membrane 10, is preferably between about 1.0 mm to about 2.5 mm. As shown in Figure 1, incoming light 19, is reflected or distributed as reflected light 19R. The angle of reflection depends on how the reflection 19R, is being measured, and thus the inventor has defined an average reflectivity range, and not the method or the instrument being used to observe the reflectivity of the moderate reflectivity granular particle layer 14, on the surface 14A. The at least one layer of at least one moderate reflectivity granular particle layer 14, can be selected from a group comprising of sand, partially hydrated cement granules, such as, made of gray cement, or a white cement that has been tinted or dyed to provide a darker color or moderate reflectivity, tinted granules, gray sand, black sand, red sand, silica sand, and combinations thereof, to name a few, and where the average reflectivity of the granular particle layer 14, is between about 35 percent to below 55 percent reflectivity so as to form the inventive moderate reflectivity granular particle layer 14. For some applications, to reduce the average reflectivity below, for example, below 55 percent average reflectivity, one could tint or dye or color the granules particles 14, such as, for example, the moderate reflectivity granular particle layer 14, could be, for example, a blue color, a gray color, and combinations thereof, to name a few. It should be understood that the average reflectivity test as used herein is an average reflectivity test that will be conducted over the surface having the at least one moderate reflectivity granular particle layer 14, of the inventive sheet membrane 23, since the gray particles 14, are over it, and it is possible that there may be some variance in the location reflectivity, which would depend on where the reflectivity test of the inventive sheet membrane 23, i.e., the first or top sheet surface or layer 14A, might not be, for example, uniformly gray, or uniformly tinted, etc. Thus, it is possible that in production one could have lighter and darker spots on the inventive sheet membrane 23, however, the average reflectivity of the top or upper surface 14A, should be between about 35 percent reflectivity, to below 55 percent reflectivity. The inventive moderate reflectivity granular particle layer 14, provides several advantages, and benefits, such as, for example, they provide a visible contrast during construction of a floor 42, or wall 44, allowing for easier detection of punctures, tears, holes, or other irregularities, to name a few. Another benefit of the inventive sheet membrane 23, is that the moderate reflective surface 14A, makes it easier on the eyes of the construction crew who are applying or installing the inventive sheet membrane 23, in the field, in comparison to working with a bright white surface, which is similar to working in a bright light, such as, for example, working in the snow.

Figure 2, illustrates a second embodiment of the inventive below grade, blind side, waterproofing sheet membrane with adhesive and moderate reflectivity granular particle layer to fully bond to concrete/shotcrete 33, which is similar to the first embodiment 23, but, wherein the second surface 10B, of the sheet membrane 10, is provided with a surface 11, and wherein the surface 11, can be selected from a group comprising, texture, light texture, embossed, lightly embossed, undulating, and combinations thereof, to name a few.

Figure 3, illustrates a third embodiment of the inventive below grade, blind side, waterproofing sheet membrane with adhesive and moderate reflectivity granular particle layer to fully bond to concrete/shotcrete 43, which is similar to the first embodiment 23, but, wherein a layer portion 12C, of the first adhesive layer 12, does not have the at least one layer of at least one moderate reflectivity granular particle layer 14, over the first surface 12A, and where the layer portion 12C, could be covered or protected with at least one first or top removable release layer or sheet 16, which release sheet 16, is removed, as needed, during installation or application of the inventive waterproofing sheet membrane with adhesive and moderate reflectivity granular particle layer 43. It is preferred that the layer portion 12C, is along at least one edge of the first adhesive layer 12, and preferably along a factory edge 12C, such as, a selvedge 12C.

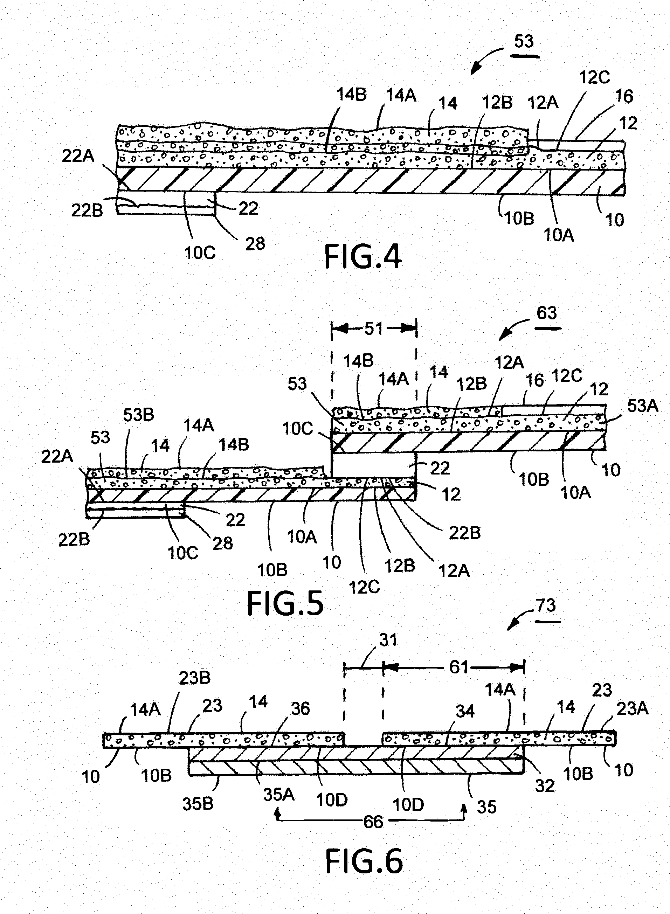

Figure 4, illustrates a fourth embodiment of the inventive below grade, blind side, waterproofing sheet membrane with adhesive and moderate reflectivity granular particle layer to fully bond to concrete/shotcrete 53, which is similar to the third embodiment 43, and wherein a layer portion 10C, of the membrane 10, has secured thereto, at least one layer of at least one second adhesive layer 22, along a portion of the second surface 10B, in the layer portion or area 10C. The second adhesive layer 22, has a first or top or upper surface 22A, and a second or lower or bottom surface 22B. The second surface 22B, of the second adhesive layer 22, is preferably covered or protected with at least one second or bottom removable release layer or sheet 28, while the surface 22A, of the at least one second adhesive layer 22, is in secure mating contact with the second surface 10B, in the layer portion or area 10C. The at least one second release sheet 28, is removed, as needed, during installation or application of the inventive waterproofing sheet membrane with adhesive and moderate reflectivity granular particle layer 53. It is preferred that the layer portion 10C, is along at least one edge of the membrane layer 10, and preferably along a factory edge 10C, such as, a selvedge 10C.

As one can clearly see in Figure 4, that the inventive waterproofing layer 53, having a waterproofing sheet membrane, and an adhesive layer having embedded therein and having moderate reflectivity granular particles embedded therein 53, has dual removable release liners or sheets 16, 28, protecting a first adhesive layer 12, and a second adhesive layer 22, and where the first removable release layer or sheet 16, protects the first adhesive layer 12, which is on the first or top or upper portion 12A, of the inventive waterproofing layer 53, having a waterproofing sheet membrane, and an adhesive layer having embedded therein and having moderate reflectivity granular particles embedded therein 53, and a second removable release layer or sheet 28, protects the second adhesive layer 22, which is on the second or bottom or lower portion 10B, of the inventive waterproofing layer 53, having a waterproofing sheet membrane, and an adhesive layer having embedded therein and having moderate reflectivity granular particles embedded therein 53.

Figure 5, illustrates a fifth embodiment of the inventive below grade, blind side, waterproofing sheet membrane with adhesive and moderate reflectivity granular particle layer to fully bond to concrete/shotcrete 63, which is similar to the fourth embodiment 53. As shown in Figure 5, the two inventive sheets 53, comprises of a first inventive membrane sheet 53A, and a second inventive membrane sheet 53B, which are joined or mated together, so as to create a "continuous" inventive membrane sheet 53. As shown in Figure 5, one edge of the first inventive membrane sheet 53A, is secured to another edge of a second inventive membrane sheet 53B. As shown in Figure 5, the top release sheet 16, of the second inventive sheet 53B, is removed so as to expose at least a portion of the first adhesive layer 12, along the layer portion 12C, and the bottom release sheet 28, of the first inventive membrane sheet 53A, is removed so as to expose at least a portion of the second surface 22B, of the second adhesive layer 22, along the layer portion 10C, and wherein at least a portion of the first adhesive layer 12, of the second inventive sheet 53B, is secured to at least a portion of the second adhesive layer 22, of the first inventive membrane sheet 53A, and thus creating a bond along a length or area or overlap 51.

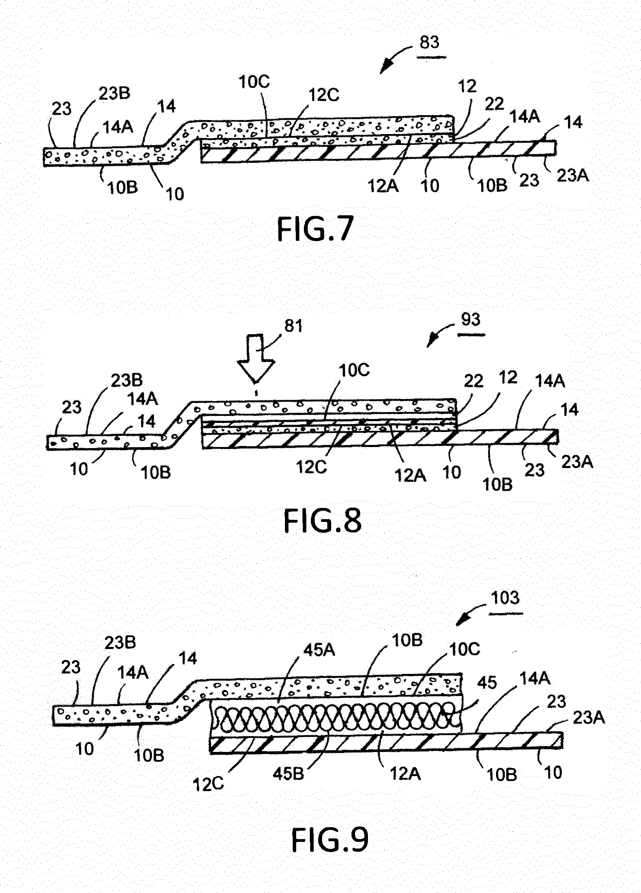

Figure 6, illustrates a sixth embodiment of the inventive below grade, blind side, waterproofing sheet membrane with adhesive and moderate reflectivity granular particle layer to fully bond to concrete/shotcrete 73, where one edge of a first inventive sheet membrane 23, is secured to another edge of a second inventive sheet membrane 23. A detail strip 35, having a first or upper or top surface 35A, and a second or lower or bottom surface 35B, is used to secure at least two inventive sheet membranes 23, along a seam or gap 31. As shown in Figure 6, the two individual inventive sheet membrane 23, comprises of at least one first inventive sheet membrane 23A, and at least one second inventive sheet membrane 23B, that are joined or mated together along an edge or seam 31, so as to create a "continuous" inventive sheet membrane 23. As shown in Figure 6, a release layer or sheet (not shown) is removed from the upper surface 35A, of the detail strip 35, so as to expose at least one layer of at least one third adhesive layer 32, which has already been secured to an upper or top surface 35A, of the detail strip 35. The second surface 10B, of a first inventive sheet membrane 23A, is placed over a first adhesive portion 34, of the third adhesive layer 32, and the two surfaces are securely mated or joined each to the other creating a bond along a length or area or overlap 61. In the next step, the second surface 10B, of a second inventive sheet membrane 23B, is placed over a second adhesive portion 36, of the exposed portion of the third adhesive layer 32, and the two surfaces are securely mated or joined each to the other, similarly, creating a bond along a length or area or overlap 61. The sixth embodiment is very useful when installing the "alternative non-factory lap". It should be appreciated that the edges of the inventive sheet membrane 23, may not be perfectly straight or aligned, and thus one could have a seam or gap 31, between the edges of the first inventive sheet membrane 23A, and the second inventive sheet membrane 23B. For some applications one could also use a pressure source 81, as shown in Figure 8, such as, for example, using a steel or rubber roller 81, which is rolled or passed over the lap or the joint area or seam 66, along the seam or gap 31, several time while applying significant pressure to completely and securely bond or mate the detail strip 35, to the first inventive sheet membrane 23A, and to the second inventive sheet membrane 23B. A similar pressure source 81, can also be used whenever a first inventive sheet or membrane 23A, is being mated or secured to a second inventive sheet or membrane 23B, such as, along an edge 10D, or selvedge 10D, 12C.

Figure 7, illustrates a seventh embodiment of the inventive below grade, blind side, waterproofing sheet membrane with adhesive and moderate reflectivity granular particle layer to fully bond to concrete/shotcrete 83, where one portion, such as, an edge of a first inventive sheet membrane 23, is secured to another portion, such as, an edge of a second inventive sheet membrane 23. As shown in Figure 7, the two individual inventive sheet membranes 23, comprises of at least one first inventive sheet membrane 23A, and at least one second inventive sheet membrane 23B, that are joined or mated together along an edge so as to create a "continuous" inventive sheet membrane 23. As shown in Figure 7, the layer portion 12C, of the first surface 12A, of the first adhesive layer 12, of the first inventive sheet membrane 23A, is exposed for securing to the second inventive sheet membrane 23B, or the second adhesive layer 22, along the surface 10B, or layer portion 10C, of the second inventive sheet membrane 23B, is exposed for securing to the second inventive sheet membrane 23B. Thus, one would take the exposed surface of the first adhesive layer 12, or the second adhesive layer 22, of the first inventive sheet membrane 23A, and secure it to a portion of the second inventive sheet membrane 23B, that does not have an exposed first adhesive layer 12, or second adhesive layer 22, such as, along an edge 10C, 12C, or selvedge 10C, 12C.

Figure 8, illustrates a eight embodiment of the inventive below grade, blind side, waterproofing sheet membrane with adhesive and moderate reflectivity granular particle layer to fully bond to concrete/shotcrete 93, where one portion, such as, an edge of a first inventive sheet membrane 23, is secured to another portion, such as, an edge of a second inventive sheet membrane 23. As shown in Figure 8, the two individual inventive sheet membranes 23, comprises of at least one first inventive sheet membrane 23A, and at least one second inventive sheet membrane 23B, that are joined or mated together along an edge so as to create a "continuous" inventive sheet membrane 23. As shown in Figure 8, the layer portion 12C, of the first surface 12A, of the first adhesive layer 12, of a first inventive sheet membrane 23A, has the first adhesive surface 12A, exposed, such as, by the removal of the release sheet 16, and that the second inventive sheet membrane 23B, having the second adhesive layer 22, is also exposed, such as, by the removal of the release sheet 28, and thus the exposed surface of the first adhesive layer 12, is mated with and secured to the exposed surface of the second adhesive layer 22, which results in the joining of the first inventive sheet membrane 23A, to the second inventive sheet membrane 23B, such as, along an edge 10C, 12C, or selvedge 10C, 12C. Optionally, one could also use at least one pressure source 81, such as, for example, a steel or rubber roller 81, that could be applied over the seam or gap 31, or the overlap 51, 61, several times while applying significant pressure to completely, and securely bond the first inventive sheet membrane 23A, to the second inventive sheet membrane 23B. At least one pressure source 81, can also be used whenever a first inventive sheet or membrane 23A, is being mated or secured to a second inventive sheet or membrane 23B, such as, along an edge 10D, or selvedge 10D. For some applications, such as, for example, during cold or wet weather where a first at least one inventive sheet membrane 23A, for some reason is not adhering to a second at least one inventive sheet membrane 23B, one could optionally, and gently, use at least one securing force 81, such as, for example, a heat gun 81, or a welder 81, (such as, a Liester welder), which would help improve the adhesion between the two overlapping inventive sheet membranes 23A, and 23B, such as, for example, along the overlap 51, 61. Thus, it should be understood that the at least one securing force 81, could be selected from a group comprising a roller, steel roller, a rubber roller, a plastic roller, a heat gun, a welder, and combinations thereof, to name a few.

Figure 9, illustrates a ninth embodiment of the inventive below grade, blind side, waterproofing sheet membrane with adhesive and moderate reflectivity granular particle layer to fully bond to concrete/shotcrete 103, where one portion, such as, an edge of a first inventive sheet membrane 23, is secured to another portion, such as, an edge of a second inventive sheet membrane 23. As shown in Figure 9, the two individual inventive sheet membranes 23, comprises of at least one first inventive sheet membrane 23A, and at least one second inventive sheet membrane 23B, that are joined or mated together along an edge so as to create a "continuous" inventive sheet membrane 23. As shown in Figure 9, the first surface 12A, or the first surface 14A, of the first inventive sheet membrane 23A, has secured thereto at least one double sided tape 45, such as, for example, an Aussie Skin Double Sided tape 45. The at least one double sided tape 45, has a first or upper or top surface 45A, and a second or lower or bottom surface 45B. The second surface 10B, of the second inventive sheet membrane 23B, is placed over at least an exposed portion of the double-sided tape 45, and the two inventive sheet membranes 23A, and 23B, are mated or joined each to the other, and which results in the joining of the first inventive sheet membrane 23A, to the second inventive sheet membrane 23B, such as, along an edge 10C, 12C, or selvedge 10C, 12C, and creating an overlap 51, 61.

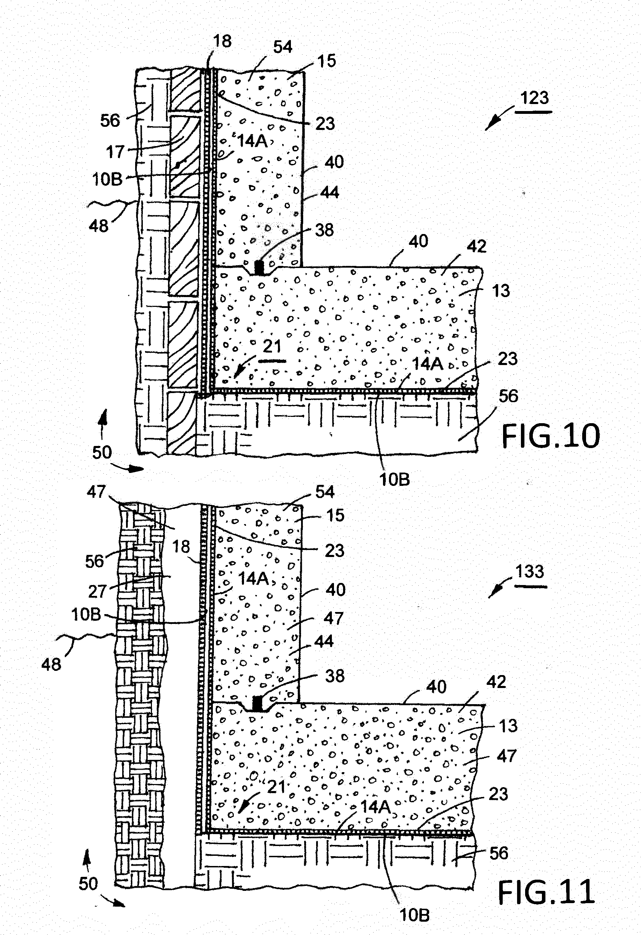

Figure 10, illustrates a tenth embodiment of the inventive below grade, blind side, waterproofing sheet membrane with adhesive and moderate reflectivity granular particle layer to fully bond to concrete/shotcrete 123. After an area 50, has been dug up or prepared for the foundation of a building 54, or a floor 42, or a wall 44, or a structure 54, it is recommended that the area under the floor areas 42, be either compacted, to form a compacted earth 56, or that a mud slab 56, be installed, so as to create a substantially or appreciably flat horizontal or floor surface 42. It is also recommended that similar steps are also taken for the preparation of a side wall 44, or a blind wall 44, or a similar other structure 54, where the earth around the area 50, is compacted so as to create compacted or retained earth 56, or a mud slab 56, creating a substantially flat vertical or wall surface 44. For some applications it is recommended that at least one layer of a retaining means 17, or a soil retention system 17, such as, for example, wood lagging 17, be installed along the exposed surface or face of the compacted or retained earth 56, or the mud slab 56. For a blind side wall 44, a soil retention system 17, could also be installed, such as, for example, using wood lagging 17, soil cement 17, etc. It should be appreciated that a soil retention system 17, helps in holding back the compacted earth or dirt 56, from coming down due to, for example, gravity. The soil retention system 17, also helps in creating a substantially uniform vertical surface for the wall 44. Optionally, for some applications, if needed, one could also place at least one drain board 18, (such as, for example, AVM Drain Board 6000), or at least one foam layer 18, or at least one polystyrene insulation board 18, or any other protection media 18, as required, along the exposed surface or face of the wood lagging 17. The next step is to apply or secure at least one layer of the inventive membrane sheet 23, such as, for example, Aussie Skin 550G, Aussie Skin 560G, against the open face or surface of the wall 44, or drain board 18, or foam layer 18, (if used) or over or against the compacted earth 56, or mud slab 56, or waist slab 56, or the soil retention system 17. It should be understood that the second surface 10B, of the sheet membrane or layer 10, would face or be secured to the open face or surface of the wall 44, or drain board 18, or foam layer 18, (if used) or over or against the compacted earth 56, or mud slab 56, or waist slab 56, or the soil retention system 17, and the first surface 14A, of the at least one layer of at least one moderate reflectivity granular particle layer 14, would be used to secure or apply the concrete / shotcrete 13, 15. The inventive sheet waterproofing membrane or layer 23, usually comes in sheets 23, or rolls 23, which are then hung onto the exposed wall surface 44, using at least one securing means, such as, nails, screws, bolt, anchor, adhesive material, and combinations thereof, to name a few. The inventive sheet waterproofing layer 23, that is installed along the surface of the wall 44, may terminate at the wall-to-floor corner 21, or be returned or extend several inches along the floor 42, such as, for example, say about 12 inches (30 cm) along the floor 42, and creating at least one sheet waterproofing layer extension, or for some applications it could extend along the whole floor surface or floor 42. The inventive membrane or layer 23, may not need to be secured to the floor 42, at all and simply be laid on the ground or floor 42, and then one would use gravity to hold the layer or sheet membrane 23, in place. The next step is to create a concrete barrier for the foundation of the structure 54, or wall 44, or building 54, such as, for example, a concrete or shotcrete slab 13, which would go onto the floor 42, and/or a concrete or shotcrete wall 15, which would be along the wall 44, or a ceiling (not shown). The concrete wall 15, or concrete floor 13, that is formed over the inventive sheet membrane 23, is such that the exposed side of the concrete wall 44, 15, or floor 42, 13, forms the interior wall 40, or the exterior wall 40, or interior floor 40, or exterior floor 40, of the structure 54, or building 54. The concrete slab 13, 15, or barrier 13, 15, for the foundation of the structure 54, or floor 42, or wall 54, or building 54, is preferably a concrete or shotcrete slab or floor 13, and/or a concrete or shotcrete wall 15. The inventive membrane waterproofing system 23, prevents the water 48, or moisture 48, or hydrostatic pressure 48, from penetrating into the concrete/shotcrete floor 13 or concrete/shotcrete wall 15, from around a water table 48, or moisture 48, or hydrostatic pressure 48, thus keeping the floor 42, or the wall 44, or ceiling (not shown) completely dry, even though the area 50, around the structure 54, has water 48, or moisture 48, or hydrostatic pressure 48. The inventive membrane waterproofing system 23, comprises essentially of at least one inventive sheet membrane 23, which allows for a waterproofing of the area or regions that needs waterproofing or moisture proofing. For some applications, one could also provide the floor 42, wall 44, joining location with at least one water-stop 38, such as, for example, an Aussie swell water-stop 38.

Figure 11, illustrates a eleventh embodiment of the inventive below grade, blind side, waterproofing sheet membrane with adhesive and moderate reflectivity granular particle layer to fully bond to concrete/shotcrete 133. The structure of Figure 11, is similar to the structure of Figure 10, except that a concrete or a shotcrete retaining wall 27, has been installed instead of a wood lagging 17, between the retained earth 56, and the optional insulation board 18, or the drain board 18, and the inventive sheet waterproofing membrane 23. For some applications the concrete or a shotcrete retaining wall 27, 44, could contain at least one metal wire mesh, which is embedded within the shotcrete/concrete 27, 15. The concrete or a shotcrete retaining wall 27, 44, can also be reinforced, using at least one reinforcing means 47, such as, for example, steel rods 47, steel mesh 47, rebar 47, fibers 47, wire mesh 47, and combinations thereof, to name a few. For some applications, the sprayed concrete 13, 15, or shotcrete 13, 15, is typically reinforced by conventional securing means 47, such as, for example, steel rods 47, steel mesh 47, fibers 47, and combinations thereof, or, for example, a rebar cage 47.

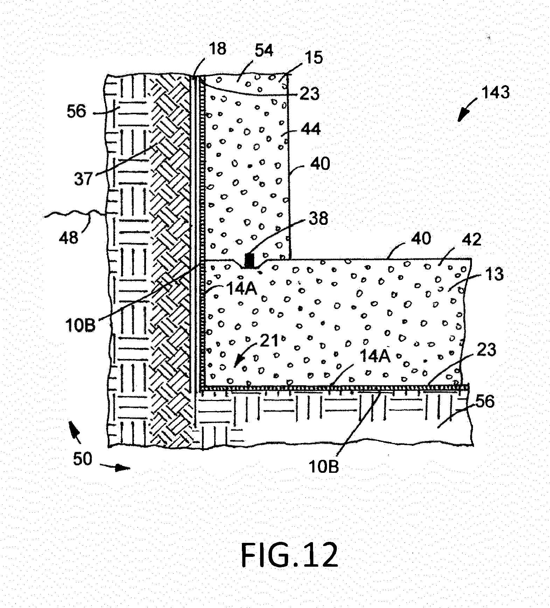

Figure 12, illustrates a twelfth embodiment of the inventive below grade, blind side, waterproofing sheet membrane with adhesive and moderate reflectivity granular particle layer to fully bond to concrete/shotcrete 143. The structure of Figure 12, is similar to the structure of Figure 10, except that another soil retention system 37, is being shown instead of a wood lagging 17, between the retained earth 56, and the optional insulation board 18, or the drain board 18, and the inventive sheet waterproofing membrane 23. The another soil retention system 37, could be any of the other typical soil retention systems 37, such as, for example, lagging retention systems, soil/cement retention systems, shot-crete retention systems, concrete retention systems, using shot-crete or concrete to create thin temporary walls retention systems, plywood retention systems, pylons retention systems, caissons retention systems, sheet-metal piles retention systems, diaphragm wall retention systems, and combinations thereof, to name a few. For some applications, such as, for example, a blind side wall 44, a soil retention system 37, may be needed to be installed, such as, for example, using wood lagging 37, a soil cement 37, a metal wire mesh embedded in concrete 37, to name a few. It should be appreciated that a soil retention system 37, helps in holding back the compacted earth or dirt 56, from coming down due to, for example, gravity. The soil retention system 37, also helps in creating a substantially uniform vertical wall surface 44.

For some applications, such as, for example, the first inventive sheet membrane 23A, has to be secured to a second inventive sheet membrane 23B, Such as shown in Figures 5-9, it is preferred that a steel or rubber roller 81, is rolled or passed over the lap or the joint area 31, 51, 61, several times while applying pressure to ensure proper adhesion between the first at least one inventive sheet membrane 23A, and the second at least one inventive sheet membrane 23B, that are being joined at their respective edges. For some applications, such as, for example, during cold or wet weather where a first at least one inventive sheet membrane 23A, for some reason is not adhering to a second at least one inventive sheet membrane 23B, one could optionally, and gently, use a heat gun 81, or welder 81, (such as, a Liester welder), which will help improve the adhesion between the two overlapping inventive sheet membranes 23A, and 23B.

The inventive sheet membrane 23, comprises of at least one sheet membrane 10, having at least one layer of at least one first adhesive layer 12, along with the at least one layer of at least one moderate reflectivity granular particle layer 14, such as, for example, an Aussie Skin 550G, Aussie Skin 560G, inventive sheet membrane 23, is very thick, such as, for example, about 1.2 mm thick. The at least one layer of the at least one sheet membrane 10, with at least one first adhesive layer 12, having at least one layer of moderate reflectivity granular particle layer 14, such as, for example, the Aussie Skin 550G, Aussie Skin 560G, inventive sheet membrane 23, preferably has a thickness from say between about 20 mils (0.5 mm) to about 240 mils (6.1 mm). For some applications one could also use a high-density polyethylene (HDPE) sheet membrane 10, having at least one layer of at least one first adhesive layer 12, along with the at least one layer of at least one moderate reflectivity granular particle layer 14, such as, for example, Aussie Skin 550G, Aussie Skin 560G, inventive sheet membrane 23, and having different thicknesses, depending on the job requirements, and ranging, for example, from about 0.5 mm to about 2.5 mm thick, that can be secured to the exposed face of the receiving surface 42, 44, such as, for example, a foundation 42, or a wall 44.

For areas where at least one sheet membrane10, having at least one layer of at least one first adhesive layer 12, along with the at least one layer of at least one moderate reflectivity granular particle layer 14, such as, for example, Aussie Skin 550G sheet or layer, Aussie Skin 560G inventive sheet membrane 23, is being joined to another sheet membrane 10, having at least one layer of at least one first adhesive layer 12, along with the at least one layer of at least one moderate reflectivity granular particle layer 14, such as, at a gap or seam 31, it is preferred that the area that is going to be overlapped 31, 51, 61, has clean surfaces. Before bonding the next layer of the at least one sheet membrane 10, with first adhesive layer 12, with the at least one layer of at least one moderate reflectivity granular particle layer 14, to an existing layer, or an adjacent layer, or a second layer, of at least one sheet membrane with adhesive, one should remove the release sheet or film(s) from the factory laps. It is preferred the next or second at least one inventive sheet membrane 23, be installed and mated with the previous or already installed at least one inventive sheet membrane 23, and has, for example, a minimum of say, between about 2.0 inches (5.1 cm) to about 6.0 inches (15.2 cm) overlap 51, 61. For some applications it is preferred that at least one pressure source 81, such as, for example, a steel or rubber roller 81, is rolled or passed over the lap or the joint area or seam 66, and along the gap or seam 31, or the joint area 31, 51, 61, several times while applying pressure 81, to ensure proper adhesion between the first at least one inventive sheet membrane 23A, and the second at least one inventive sheet membrane 23B, that are being joined at their respective edges. For some applications, such as, for example, during cold or wet weather where a first at least one inventive sheet membrane 23A, for some reason is not adhering to a second at least one inventive sheet membrane 23B, one could optionally, and gently, use a heat gun 81, or welder 81, (such as, a Liester welder), which will help improve the adhesion between the two overlapping inventive sheet membranes or layers 23A, and 23B. It should be understood that the at least one pressure source 81, can be similarly used to secure a first inventive sheet or membrane 23, 23A, 33, 43, 53, 53A, to a second inventive sheet or membrane 23, 23B, 33, 43, 53, 53B.

The reflectivity as mentioned herein can be measured in a number of ways, such as, for example, using a Novo Shade Duo Reflectivity Meter. The Novo Shade Duo Reflectometer has 3 distinct modes of operation, each using the 0/45 geometry, which are, (a) measuring the shade of a surface on a greyscale, (b) measuring the substrate opacity / hiding power, and (c) measuring the substrate cleanliness. Once a sample is placed in the reflectivity meter, within a fraction of a second, the result is displayed in "percentage Reflectance". For the purposes of understanding, a appreciably black sample would be displayed as "0 percent Reflectance", while a appreciably bright white sample would result in a reading by the reflectivity meter as being "100 percent Reflectance". Only shading is measured, irrespective of color, and is commonly referred to as percent whiteness or percent darkness. The first or reflective surface 14A, of the inventive sheet membrane or layer of the present invention 23, 33, 43, 53, 63, 73, 83, 93, 103, has a whiteness or brightness value that is between about 35 percent reflectivity to below 55 percent reflectivity. Even though the Novo Shade Duo Reflectivity Meter is extremely accurate however, during the mass production of the at least one layer of at least one moderate reflectivity granular particle layer 14, one should take into account the batch variances, and thus one could have a variation or standard deviation for the reflectivity percentage between each batch or at least one layer of at least one moderate reflectivity granular particle layer 14, and another layer of at least one moderate reflectivity granular particle layer 14.

Another Reflectivity measuring device currently in use in the market is made by Rhopoint Instruments, Ltd., and is called Model Number Novo-Shade Duo+ (Novo-Shade DuoPlus), which is a dual function 45/0 degree reflectometer. The Novo-Shade DuoPlus has many features, such as, for example it measures the Reflectivity, based on measuring the shade of a surface on a greyscale, and also allows the measuring of the substrate opacity/hiding power, and it can also measure the substrate cleanliness. And, thus one can easily use the Novo-Shade DuoPlus to check that the reflectivity of the at least one layer of at least one moderate reflectivity granular particle layer is between about 35 percent reflectivity, to below 55 percent reflectivity.

Shotcrete 13, 15, or sprayed concrete 13, 15, is concrete 13, 15, or mortar 13, 15, conveyed through a hose (not shown) and pneumatically projected at high velocity onto a surface 42, 44, as a construction technique. For some applications the sprayed concrete 13, 15, or shotcrete 13, 15, is typically reinforced by conventional securing means 47, such as, for example, steel rods, steel mesh, fibers, and combinations thereof, or, for example, a rebar cage. Shotcrete 13, 15, can be placed, and compacted at the same time, due to the force with the nozzle, and it can be sprayed onto any type or shape of surface 42, 44, including vertical surface 44, horizontal surface 42, or overhead areas (not shown), such as, along a roof or ceiling, which is done in a similar manner as the application along the horizontal floor 42, or a vertical wall 44, and would be well known to a person skilled in the art.

For some applications, such as, below the water table 48, a drain board 18, may be substituted with an approved protection layer 18, as long as the approved protection layer 18, is providing sufficient protection for the inventive sheet waterproofing membrane 23, 33, 43, 53, 63, 73, 83, 93, 103, installed on the building or structure 54.

As stated earlier that this invention 23, 33, 43, 53, 63, 73, 83, 93, 103, can be used, such as, for example, especially in a high risk conditions, where, for example, the building 54, or floor 42, or wall 44, or structure 42, 44, 54, is going to be built in a water table 48, area 50, and/or exposed to periodic or on-going hydrostatic pressure 48.

## Claims

1. A below grade, blind side, waterproofing sheet membrane with adhesive and moderate reflectivity granular particle layer to fully bond to concrete/shotcrete, comprising:
(a) at least one sheet membrane having a first membrane surface, and a second membrane surface;
(b) at least one first adhesive layer having a first adhesive surface, and a second adhesive surface, and wherein said second adhesive surface is in secure contact with at least a portion of said first membrane surface; and
(c) at least one layer of at least one moderate reflectivity granular particle layer, having a first particle layer surface, and a second particle layer surface, and wherein said second particle layer surface is in secure contact with at least a portion of said first adhesive surface, and wherein reflectivity of said at least one layer of at least one moderate reflectivity granular particle layer is between 35 percent reflectivity to below 55 percent reflectivity on a standard reflectivity scale, wherein the reflectivity is measured in percentage reflectance by a 45/0 degree reflectometer.

2. The below grade, blind side, waterproofing sheet membrane with adhesive and moderate reflectivity granular particle layer to fully bond to concrete/shotcrete of Claim 1, wherein said at least one moderate reflectivity granular particle layer comprises of dyed granular particles.

3. The below grade, blind side, waterproofing sheet membrane with adhesive and moderate reflectivity granular particle layer to fully bond to concrete/shotcrete of any one of Claims 1 and 2, wherein said at least one moderate reflectivity granular particle layer comprises of dyed granular particles, and wherein said dyed granular particles are selected from a group consisting of blue color granular particles, gray color granular particles, and combinations thereof.

4. The below grade, blind side, waterproofing sheet membrane with adhesive and moderate reflectivity granular particle layer to fully bond to concrete/shotcrete of any one of Claims 1 to 3, wherein said at least one layer of at least one moderate reflectivity granular particle layer is selected from a group consisting of sand layer, partially hydrated cement granules layer, a gray cement layer, a white cement layer that has been dyed to provide moderate reflectivity, a tinted granules layer, a gray sand layer, a black sand layer, a red sand layer, a silica sand layer, and combinations thereof.

5. The below grade, blind side, waterproofing sheet membrane with adhesive and moderate reflectivity granular particle layer to fully bond to concrete/shotcrete of any one of Claims 1 to 4, wherein said second membrane surface has a distinct surface, and wherein said distinct surface is selected from a group consisting of a textured surface, a light textured surface, an embossed surface, a lightly embossed surface, an undulating surface, and combinations thereof.

6. The below grade, blind side, waterproofing sheet membrane with adhesive and moderate reflectivity granular particle layer to fully bond to concrete/shotcrete of any one of Claims 1 to 5, wherein said at least one sheet membrane is made from a material selected from a group consisting a high-density polyethylene (HDPE) material, a thermoplastic polyolefin (TPO) material, and combinations thereof.

7. The below grade, blind side, waterproofing sheet membrane with adhesive and moderate reflectivity granular particle layer to fully bond to concrete/shotcrete of any one of Claims 1 to 6, wherein said at least one sheet membrane is made from a material selected from a group consisting a high-density polyethylene (HDPE) material, a thermoplastic polyolefin (TPO) material, and combinations thereof, and wherein thickness of said at least one sheet membrane is preferably between about 1.0 mm and about 2.5 mm.

8. The below grade, blind side, waterproofing sheet membrane with adhesive and moderate reflectivity granular particle layer to fully bond to concrete/shotcrete of any one of Claims 1 to 7, wherein an end portion of said first adhesive surface has removeably secured thereto at least one first protective release sheet.

9. The below grade, blind side, waterproofing sheet membrane with adhesive and moderate reflectivity granular particle layer to fully bond to concrete/shotcrete of Claim any one of 1 to 7, wherein an end portion of said first adhesive surface has removeably secured thereto at least one first protective release sheet, and wherein said end portion is one of factory edge, and selvedge.

10. The below grade, blind side, waterproofing sheet membrane with adhesive and moderate reflectivity granular particle layer to fully bond to concrete/shotcrete of any one of Claims 1 to 7, wherein an end portion of said first adhesive surface has removeably secured thereto at least one first protective release sheet, and wherein said at least one first protective release sheet is adjacent and substantially planar with said at least one layer of at least one moderate reflectivity granular particle layer.

11. The below grade, blind side, waterproofing sheet membrane with adhesive and moderate reflectivity granular particle layer to fully bond to concrete/shotcrete of any one of Claims 1 to 10, further comprising:
(d) at least one detail strip having a first detail strip surface, and a second detail strip surface; and
(e) at least one detail adhesive having a first detail adhesive surface, and a second detail adhesive surface, and wherein said second detail adhesive surface is in secure contact with said first detail strip surface, and at least a portion of said first detail adhesive surface is securely secured to at least a portion of at least one second membrane surface.

12. The below grade, blind side, waterproofing sheet membrane with adhesive and moderate reflectivity granular particle layer to fully bond to concrete/shotcrete of Claim 11, wherein said at least one second membrane surface is secured to said at least one detail strip by at least one pressure source.

13. The below grade, blind side, waterproofing sheet membrane with adhesive and moderate reflectivity granular particle layer to fully bond to concrete/shotcrete of Claim 11, wherein said at least one second membrane surface is secured to said at least one detail strip by at least one pressure source, and wherein said at least one pressure source is selected from a group consisting of a roller, steel roller, a rubber roller, a plastic roller, a heat gun, a welder, and combinations thereof.

14. The below grade, blind side, waterproofing sheet membrane with adhesive and moderate reflectivity granular particle layer to fully bond to concrete/shotcrete of any one of Claims 1 to 13, further comprising:
(d) at least one second adhesive layer having a top adhesive surface, and a bottom adhesive surface; and
(e) wherein said top adhesive surface is securely secured to at least a portion of at least one second membrane surface.

15. The below grade, blind side, waterproofing sheet membrane with adhesive and moderate reflectivity granular particle layer to fully bond to concrete/shotcrete of any one of Claims 1 to 13, further comprising:
(d) at least one second adhesive layer having a top adhesive surface, and a bottom adhesive surface;
(e) wherein said top adhesive surface is securely secured to at least a portion of at least one second membrane surface; and
(f) wherein at least one second protective release sheet is removeably secured to said bottom adhesive surface of said at least one second adhesive layer.

16. The below grade, blind side, waterproofing sheet membrane with adhesive and moderate reflectivity granular particle layer to fully bond to concrete/shotcrete of any one of Claims 1 to 13, further comprising:
(d) at least one double sided adhesive tape having a top adhesive tape surface, and a bottom adhesive tape surface; and
(e) wherein said top adhesive tape surface is securely secured to at least a portion of at least one second membrane surface.

17. The below grade, blind side, waterproofing sheet membrane with adhesive and moderate reflectivity granular particle layer to fully bond to concrete/shotcrete of any one of Claims 1 to 13, further comprising:
(d) at least one double sided adhesive tape having a top adhesive tape surface, and a bottom adhesive tape surface; and
(e) wherein said bottom adhesive tape surface is securely secured to at least a portion of said at least one layer of at least one moderate reflectivity granular particle layer.

18. A method of forming a below grade, blind side, waterproofing sheet membrane with adhesive and moderate reflectivity granular particle layer to fully bond to concrete/shotcrete, comprising the steps of:
(a) taking at least one sheet membrane having a first membrane surface, and a second membrane surface;
(b) applying at least one first adhesive layer having a first adhesive surface, and a second adhesive surface, onto said at least one sheet membrane, and wherein said second adhesive surface is in secure contact with at least a portion of said first membrane surface; and
(c) applying at least one layer of at least one moderate reflectivity granular particle layer, having a first particle layer surface, and a second particle layer surface, over at least a portion of said at least one first adhesive layer, and wherein said second particle layer surface is in secure contact with at least a portion of said first adhesive surface, and wherein reflectivity of said at least one layer of at least one moderate reflectivity granular particle layer is between 35 percent reflectivity to below 55 percent reflectivity on a standard reflectivity scale, wherein the reflectivity is measured in percentage reflectance by a 45/0 degree reflectometer.

19. A method of forming a below grade, blind side, waterproofing sheet membrane with adhesive and moderate reflectivity granular particle layer to fully bond to concrete/shotcrete, comprising the steps of:
(a) taking the waterproofing sheet membrane with adhesive and moderate reflectivity granular particle layer of any one of Claims 1 to 17, and placing it against at least one structure, such that said second membrane surface of said at least one sheet membrane is in physical contact with said at least one structure, and wherein said first particle layer surface of said at least one layer of at least one moderate reflectivity granular particle layer is exposed; and
(b) applying at least one layer of one of concrete and shotcrete over at least a portion of said first particle layer surface of said at least one layer of at least one moderate reflectivity granular particle layer.

20. The below grade, blind side, waterproofing sheet membrane with adhesive and moderate reflectivity granular particle layer to fully bond to concrete/shotcrete of Claims 1 to 17, wherein said at least one sheet membrane, said at least one first adhesive layer, and said at least one layer of at least one moderate reflectivity granular particle layer has a thickness between 0.5 mm to 6.1 mm.

## Patentansprüche

1. Unterirdische, blindseitige, wasserdichte Folienmembran mit einer Schicht aus Klebstoff und körnigen Teilchen mit mäßigem Reflexionsvermögen zur vollständigen Bindung an Beton/Spritzbeton, umfassend:
(a) mindestens eine Folienmembran mit einer ersten Membranoberfläche und einer zweiten Membranoberfläche;
(b) mindestens eine erste klebende Schicht mit einer ersten klebenden Oberfläche und einer zweiten klebenden Oberfläche, wobei die zweite klebende Oberfläche in sicherem Kontakt mit mindestens einem Abschnitt der ersten Membranoberfläche steht; und
(c) mindestens eine Schicht aus mindestens einer körnigen Teilchenschicht mit mäßigem Reflexionsvermögen, die eine erste Teilchenschicht-Oberfläche und eine zweite Teilchenschicht-Oberfläche aufweist, und wobei die zweite Teilchenschicht-Oberfläche in sicherem Kontakt mit mindestens einem Abschnitt der ersten Klebstoffoberfläche steht, und wobei das Reflexionsvermögen der mindestens einen Schicht aus mindestens einer körnigen Teilchenschicht mit mäßigem Reflexionsvermögen zwischen 35 Prozent Reflexionsvermögen und unter 55 Prozent Reflexionsvermögen auf einer Standard-Reflexionsskala liegt, wobei das Reflexionsvermögen in Prozent Reflexion durch ein 45/0-Grad-Reflektometer gemessen wird.

2. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach Anspruch 1, wobei die mindestens eine Schicht aus körnigen Teilchen mit mäßigem Reflexionsvermögen aus gefärbten körnigen Teilchen besteht.

3. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach einem der Ansprüche 1 und 2, wobei die mindestens eine Schicht aus körnigen Teilchen mit mäßigem Reflexionsvermögen gefärbte körnige Teilchen umfasst und wobei die gefärbten körnigen Teilchen aus einer Gruppe ausgewählt sind, die aus blauen körnigen Teilchen, grauen körnigen Teilchen und Kombinationen davon besteht.

4. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach einem der Ansprüche 1 bis 3, wobei die mindestens eine Schicht aus mindestens einer Schicht aus körnigen Teilchen mit mäßigem Reflexionsvermögen aus einer Gruppe ausgewählt ist, die aus einer Sandschicht, einer Schicht aus teilweise hydratisierten Zementgranulaten, einer grauen Zementschicht, einer weißen Zementschicht, die eingefärbt wurde, um ein mäßiges Reflexionsvermögen bereitzustellen, einer Schicht aus gefärbten Granulaten, einer grauen Sandschicht, einer schwarzen Sandschicht, einer roten Sandschicht, einer Quarzsandschicht und Kombinationen davon besteht.

5. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach einem der Ansprüche 1 bis 4, wobei die zweite Membranoberfläche eine ausgeprägte Oberfläche aufweist und wobei die ausgeprägte Oberfläche aus einer Gruppe ausgewählt ist, die aus einer strukturierten Oberfläche, einer leicht strukturierten Oberfläche, einer geprägten Oberfläche, einer leicht geprägten Oberfläche, einer gewellten Oberfläche und Kombinationen davon besteht.

6. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach einem der Ansprüche 1 bis 5, wobei die mindestens eine Folienmembran aus einem Material hergestellt ist, das aus einer Gruppe ausgewählt ist, die aus einem hochdichten Polyethylen (HDPE)-Material, einem thermoplastischen Polyolefin (TPO)-Material und Kombinationen davon besteht.

7. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach einem der Ansprüche 1 bis 6, wobei die mindestens eine Folienmembran aus einem Material hergestellt ist, das aus einer Gruppe ausgewählt ist, die aus einem hochdichten Polyethylen (HDPE)-Material, einem thermoplastischen Polyolefin (TPO)-Material und Kombinationen davon besteht, und wobei die Dicke der mindestens einen Folienmembran vorzugsweise zwischen etwa 1,0 mm und etwa 2,5 mm beträgt.

8. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach einem der Ansprüche 1 bis 7, wobei an einem Endabschnitt der ersten Klebefläche mindestens eine erste schützende Trennfolie abnehmbar befestigt ist.

9. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach einem der Ansprüche 1 bis 7, wobei an einem Endabschnitt der ersten Klebefläche mindestens eine erste schützende Trennfolie abnehmbar befestigt ist und wobei es sich bei dem Endabschnitt entweder um eine Werkskante oder um eine Webkante handelt.

10. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach einem der Ansprüche 1 bis 7, wobei an einem Endabschnitt der ersten Klebefläche mindestens eine erste schützende Trennfolie abnehmbar befestigt ist, und wobei die mindestens eine erste schützende Trennfolie an die mindestens eine Schicht aus mindestens einer Schicht aus körnigen Teilchen mit mäßigem Reflexionsvermögen angrenzt und im wesentlichen planar ist.

11. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach einem der Ansprüche 1 bis 10, ferner umfassend:
(d) mindestens einen Detailstreifen mit einer ersten Detailstreifenoberfläche und einer zweiten Detailstreifenoberfläche; und
(e) mindestens einen Detailklebstoff mit einer ersten Detailklebstoffoberfläche und einer zweiten Detailklebstoffoberfläche, wobei die zweite Detailklebstoffoberfläche in sicherem Kontakt mit der ersten Detailstreifenoberfläche steht und mindestens ein Abschnitt der ersten Detailklebstoffoberfläche sicher an mindestens einem Abschnitt der mindestens einen zweiten Membranoberfläche befestigt ist.

12. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach Anspruch 11, wobei die mindestens eine zweite Membranfläche durch mindestens eine Druckquelle an dem mindestens einen Detailstreifen befestigt ist.

13. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach Anspruch 11, wobei die mindestens eine zweite Membranfläche an dem mindestens einen Detailstreifen durch mindestens eine Druckquelle befestigt ist und wobei die mindestens eine Druckquelle aus einer Gruppe ausgewählt ist, die aus einer Walze, einer Stahlwalze, einer Gummiwalze, einer Kunststoffwalze, einer Heißluftpistole, einem Schweißgerät und Kombinationen davon besteht.

14. Unterirdische, blindseitige, wasserdichte Folienmembran mit einer Schicht aus Klebstoff und körnigen Teilchen mit mäßigem Reflexionsvermögen zur vollständigen Bindung an Beton/Spritzbeton nach einem der Ansprüche 1 bis 13, ferner umfassend:
(d) mindestens eine zweite klebende Schicht mit einer oberen klebenden Oberfläche und einer unteren klebenden Oberfläche; und
(e) wobei die obere Klebefläche sicher an mindestens einem Abschnitt der mindestens einen zweiten Membranfläche befestigt ist.

15. Unterirdische, blindseitige, wasserdichte Folienmembran mit einer Schicht aus Klebstoff und körnigen Teilchen mit mäßigem Reflexionsvermögen zur vollständigen Bindung an Beton/Spritzbeton nach einem der Ansprüche 1 bis 13, ferner umfassend:
(d) mindestens eine zweite klebende Schicht mit einer oberen klebenden Oberfläche und einer unteren klebenden Oberfläche;
(e) wobei die obere Klebefläche sicher an mindestens einem Abschnitt der mindestens einen zweiten Membranfläche befestigt ist; und
(f) wobei mindestens eine zweite schützende Trennfolie abnehmbar an der unteren Klebefläche der mindestens einen zweiten klebenden Schicht befestigt ist.

16. Unterirdische, blindseitige, wasserdichte Folienmembran mit einer Schicht aus Klebstoff und körnigen Teilchen mit mäßigem Reflexionsvermögen zur vollständigen Bindung an Beton/Spritzbeton nach einem der Ansprüche 1 bis 13, ferner umfassend:
(d) mindestens ein doppelseitiges Klebeband mit einer oberen Klebebandfläche und einer unteren Klebebandfläche; und
(e) wobei die obere Klebebandfläche sicher an mindestens einem Abschnitt von mindestens einer zweiten Membranfläche befestigt ist.

17. Unterirdische, blindseitige, wasserdichte Folienmembran mit einer Schicht aus Klebstoff und körnigen Teilchen mit mäßigem Reflexionsvermögen zur vollständigen Bindung an Beton/Spritzbeton nach einem der Ansprüche 1 bis 13, ferner umfassend:
(d) mindestens ein doppelseitiges Klebeband mit einer oberen Klebebandfläche und einer unteren Klebebandfläche; und
(e) wobei die untere Klebebandfläche sicher an mindestens einem Abschnitt der mindestens einen Schicht aus mindestens einer körnigen Teilchenschicht mit mäßigem Reflexionsvermögen befestigt ist.

18. Verfahren zur Herstellung einer unterirdischen, blindseitigen, wasserdichten Folienmembran mit einer Schicht aus Klebstoff und körnigen Teilchen mit mäßigem Reflexionsvermögen zur vollständigen Bindung an Beton/Spritzbeton, umfassend die folgenden Schritte:
(a) Nehmen mindestens einer Folienmembran mit einer ersten Membranoberfläche und einer zweiten Membranoberfläche;
(b) Aufbringen mindestens einer ersten klebenden Schicht mit einer ersten klebenden Oberfläche und einer zweiten klebenden Oberfläche auf die mindestens eine Folienmembran, wobei die zweite klebende Oberfläche in sicherem Kontakt mit mindestens einem Abschnitt der ersten Membranoberfläche ist; und
(c) Aufbringen mindestens einer Schicht aus mindestens einer körnigen Teilchenschicht mit mäßigem Reflexionsvermögen, die eine erste Teilchenschicht-Oberfläche und eine zweite Teilchenschicht-Oberfläche aufweist, auf mindestens einen Abschnitt der mindestens einen ersten Klebstoffschicht, wobei die zweite Teilchenschicht-Oberfläche in sicherem Kontakt mit mindestens einem Abschnitt der ersten Klebstoffoberfläche ist und wobei das Reflexionsvermögen der mindestens einen Schicht aus mindestens einer körnigen Teilchenschicht mit mäßigem Reflexionsvermögen zwischen 35 Prozent Reflexionsvermögen und unter 55 Prozent Reflexionsvermögen auf einer Standard-Reflexionsskala liegt, wobei das Reflexionsvermögen mit einem 45/0-Grad-Reflektometer in Prozent gemessen wird.

19. Verfahren zur Herstellung einer unterirdischen, blindseitigen, wasserdichten Folienmembran mit einer Schicht aus Klebstoff und körnigen Teilchen mit mäßigem Reflexionsvermögen zur vollständigen Bindung an Beton/Spritzbeton, umfassend die folgenden Schritte:
(a) Nehmen der wasserdichten Folienmembran mit Klebstoff und einer körnigen Teilchenschicht mit mäßigem Reflexionsvermögen nach einem der Ansprüche 1 bis 17 und Anlegen derselben an mindestens eine Struktur, so dass die zweite Membranoberfläche der mindestens einen Folienmembran in physikalischem Kontakt mit der mindestens einen Struktur steht und wobei die erste Teilchenschichtoberfläche der mindestens einen Schicht aus mindestens einer körnigen Teilchenschicht mit mäßigem Reflexionsvermögen freiliegt; und
(b) Aufbringen mindestens einer Schicht aus Beton oder Spritzbeton über mindestens einen Abschnitt der Oberfläche der ersten Teilchenschicht der mindestens einen Schicht aus mindestens einem körnigen Teilchen mit mäßigem Reflexionsvermögen.

20. Unterirdische, blindseitige, wasserdichte Folienmembran mit Klebstoff und einer Schicht aus körnigen Teilchen mit mäßigem Reflexionsvermögen zur vollständigen Bindung an Beton/Spritzbeton nach den Ansprüchen 1 bis 17, wobei die mindestens eine Folienmembran, die mindestens eine erste Klebstoffschicht und die mindestens eine Schicht aus mindestens einer Schicht aus körnigen Teilchen mit mäßigem Reflexionsvermögen eine Dicke zwischen 0,5 mm und 6,1 mm aufweisen.

## Revendications

1. Membrane d'étanchéité en feuille, sous le niveau du sol, côté aveugle, avec adhésif et couche de particules granulaires à réflectivité modérée pour adhérer complètement au béton/béton projeté, comprenant :
(a) au moins une membrane en feuille ayant une première surface de membrane et une seconde surface de membrane ;
(b) au moins une première couche adhésive ayant une première surface adhésive et une seconde surface adhésive, et dans laquelle ladite seconde surface adhésive est en contact sûr avec au moins une partie de ladite première surface de membrane ; et
(c) au moins une couche d'au moins une couche de particules granulaires à réflectivité modérée, ayant une première surface de couche de particules et une deuxième surface de couche de particules, et dans laquelle ladite deuxième surface de couche de particules est en contact sûr avec au moins une partie de ladite première surface adhésive, et dans laquelle la réflectivité de ladite au moins une couche d'au moins une couche de particules granulaires à réflectivité modérée est comprise entre 35 pour cent de réflectivité et moins de 55 pour cent de réflectivité sur une échelle de réflectivité standard, dans laquelle la réflectivité est mesurée en pourcentage de réflectivité par un réflectomètre de 45/0 degrés.

2. Membrane d'étanchéité en feuille, sous le niveau du sol, côté aveugle, avec adhésif et couche de particules granulaires à réflectivité modérée pour adhérer complètement au béton/béton projeté de la revendication 1, dans laquelle ladite au moins une couche de particules granulaires à réflectivité modérée comprend des particules granulaires teintées.

3. Membrane d'étanchéité en feuille, sous le niveau du sol, côté aveugle, avec adhésif et couche de particules granulaires à réflectivité modérée pour adhérer complètement au béton/béton projeté de l'une des revendications 1 et 2, dans laquelle ladite au moins une couche de particules granulaires à réflectivité modérée comprend des particules granulaires teintées, et dans laquelle lesdites particules granulaires teintées sont choisies dans un groupe constitué de particules granulaires de couleur bleue, de particules granulaires de couleur grise, et de combinaisons de celles-ci.

4. Membrane d'étanchéité en feuille, sous le niveau du sol, côté aveugle, avec adhésif et couche de particules granulaires à réflectivité modérée pour adhérer complètement au béton/béton projeté de l'une des revendications 1 à 3, dans laquelle ladite au moins une couche d'au moins une couche de particules granulaires à réflectivité modérée est choisie dans un groupe constitué d'une couche de sable, d'une couche de granules de ciment partiellement hydraté, d'une couche de ciment gris, d'une couche de ciment blanc qui a été teintée pour fournir une réflectivité modérée, d'une couche de granules teintée, d'une couche de sable gris, d'une couche de sable noir, d'une couche de sable rouge, d'une couche de sable siliceux, et de combinaisons de celles-ci.

5. Membrane d'étanchéité en feuille, sous le niveau du sol, côté aveugle, avec adhésif et couche de particules granulaires à réflectivité modérée pour adhérer complètement au béton/béton projeté de l'une des revendications 1 à 4, dans laquelle ladite la deuxième surface de la membrane présente une surface distincte, et dans laquelle cette surface distincte est choisie dans un groupe constitué d'une surface texturée, d'une surface légèrement texturée, d'une surface gaufrée, d'une surface légèrement gaufrée, d'une surface ondulée, et de combinaisons de ces éléments.

6. Membrane d'étanchéité en feuille, sous le niveau du sol, côté aveugle, avec adhésif et couche de particules granulaires à réflectivité modérée pour adhérer complètement au béton/béton projeté de l'une des revendications 1 à 5, dans laquelle ladite au moins une membrane en feuille est fabriquée à partir d'un matériau choisi dans un groupe composé d'un matériau en polyéthylène haute densité (PEHD), d'un matériau en polyoléfine thermoplastique (TPO), et de combinaisons de ces matériaux.

7. Membrane d'étanchéité en feuille, sous le niveau du sol, côté aveugle, avec adhésif et couche de particules granulaires à réflectivité modérée pour adhérer complètement au béton/béton projeté de l'une des revendications 1 à 6, dans laquelle ladite au moins une membrane en feuille est fabriquée à partir d'un matériau choisi dans un groupe composé d'un matériau en polyéthylène haute densité (PEHD), d'un matériau en polyoléfine thermoplastique (TPO) et de combinaisons de ceux-ci, et dans laquelle l'épaisseur de ladite au moins une membrane en feuille est de préférence comprise entre environ 1,0 mm et environ 2,5 mm.

8. Membrane d'étanchéité en feuille, sous le niveau du sol, côté aveugle, avec adhésif et couche de particules granulaires à réflectivité modérée pour adhérer complètement au béton/béton projeté de l'une des revendications 1 à 7, dans laquelle une partie terminale de ladite première surface adhésive est fixée de façon amovible à au moins une première feuille de protection amovible.

9. Membrane d'étanchéité en feuille, sous le niveau du sol, côté aveugle, avec adhésif et couche de particules granulaires à réflectivité modérée pour adhérer complètement au béton/béton projeté de l'une des revendications 1 à 7, dans laquelle une partie terminale de ladite première surface adhésive est fixée de façon amovible à au moins une première feuille de protection amovible, et dans laquelle ladite partie terminale est l'un des bords de l'usine, et la lisière.

10. Membrane d'étanchéité en feuille, sous le niveau du sol, côté aveugle, avec adhésif et couche de particules granulaires à réflectivité modérée pour adhérer complètement au béton/béton projeté de l'une des revendications 1 à 7, dans laquelle une partie terminale de ladite première surface adhésive est fixée de façon amovible à au moins une première feuille de protection amovible, et dans laquelle ladite au moins une première feuille de protection amovible est adjacente et sensiblement plane avec ladite au moins une couche d'au moins une couche de particules granulaires à réflectivité modérée.

11. Membrane d'étanchéité en feuille, sous le niveau du sol, côté aveugle, avec adhésif et couche de particules granulaires à réflectivité modérée pour adhérer complètement au béton/béton projeté de l'une des revendications 1 à 10, comprenant en outre :
(d) au moins une bande de détail ayant une première surface de bande de détail et une deuxième surface de bande de détail ; et
(e) au moins un adhésif de détail ayant une première surface d'adhésif de détail et une deuxième surface d'adhésif de détail, et dans lequel ladite deuxième surface d'adhésif de détail est en contact sûr avec ladite première surface de bande de détail, et au moins une partie de ladite première surface d'adhésif de détail est solidement fixée à au moins une partie d'au moins une deuxième surface de membrane.

12. Membrane d'étanchéité en feuille, sous le niveau du sol, côté aveugle, avec adhésif et couche de particules granulaires à réflectivité modérée pour adhérer complètement au béton/béton projeté de la revendication 11, dans laquelle ladite au moins une seconde surface de membrane est fixée à ladite au moins une bande de détail par au moins une source de pression.

13. Membrane d'étanchéité en feuille, sous le niveau du sol, côté aveugle, avec adhésif et couche de particules granulaires à réflectivité modérée pour adhérer complètement au béton/béton projeté de la revendication 11, dans laquelle ladite au moins une deuxième surface de membrane est fixée à ladite au moins une bande de détail par au moins une source de pression, et dans laquelle ladite au moins une source de pression est choisie dans un groupe constitué d'un rouleau, d'un rouleau en acier, d'un rouleau en caoutchouc, d'un rouleau en plastique, d'un pistolet thermique, d'un soudeur, et de combinaisons de ceux-ci.

14. Membrane d'étanchéité en feuille, sous le niveau du sol, côté aveugle, avec adhésif et couche de particules granulaires à réflectivité modérée pour adhérer complètement au béton/béton projeté de l'une des revendications 1 à 13, comprenant en outre :
(d) au moins une deuxième couche adhésive ayant une surface adhésive supérieure et une surface adhésive inférieure ; et
(e) dans laquelle ladite surface adhésive supérieure est solidement fixée à au moins une partie d'au moins une seconde surface de membrane.

15. Membrane d'étanchéité en feuille, sous le niveau du sol, côté aveugle, avec adhésif et couche de particules granulaires à réflectivité modérée pour adhérer complètement au béton/béton projeté de l'une des revendications 1 à 13, comprenant en outre :
(d) au moins une seconde couche adhésive ayant une surface adhésive supérieure et une surface adhésive inférieure ;
(e) dans laquelle ladite surface adhésive supérieure est solidement fixée à au moins une partie d'au moins une seconde surface de membrane ; et
(f) dans laquelle au moins une deuxième feuille de protection amovible est fixée de façon amovible à la surface adhésive inférieure de ladite au moins une deuxième couche adhésive.

16. Membrane d'étanchéité en feuille, sous le niveau du sol, côté aveugle, avec adhésif et couche de particules granulaires à réflectivité modérée pour adhérer complètement au béton/béton projeté de l'une des revendications 1 à 13, comprenant en outre :
(d) au moins une bande adhésive double-face ayant une surface adhésive supérieure et une surface adhésive inférieure ; et
(e) dans lequel la surface supérieure de la bande adhésive est solidement fixée à au moins une partie d'au moins une deuxième surface de membrane.

17. Membrane d'étanchéité en feuille, sous le niveau du sol, côté aveugle, avec adhésif et couche de particules granulaires à réflectivité modérée pour adhérer complètement au béton/béton projeté de l'une des revendications 1 à 13, comprenant en outre :
(d) au moins une bande adhésive double-face ayant une surface adhésive supérieure et une surface adhésive inférieure ; et
(e) dans lequel la surface inférieure de la bande adhésive est solidement fixée à au moins une partie de ladite couche d'au moins une couche de particules granulaires à réflectivité modérée.

18. Procédé de formation d'une membrane d'étanchéité en feuille, sous le niveau du sol, côté aveugle, avec adhésif et couche de particules granulaires à réflectivité modérée pour adhérer complètement au béton/béton projeté, comprenant les étapes suivantes :
(a) prendre au moins une membrane en feuille ayant une première surface de membrane et une deuxième surface de membrane ;
(b) appliquer au moins une première couche adhésive ayant une première surface adhésive et une seconde surface adhésive sur ladite au moins une feuille de membrane, et dans laquelle ladite seconde surface adhésive est en contact sûr avec au moins une partie de ladite première surface de membrane ; et
(c) appliquer au moins une couche d'au moins une couche de particules granulaires à réflectivité modérée, ayant une première surface de couche de particules et une deuxième surface de couche de particules, sur au moins une partie de ladite au moins une première couche adhésive, et dans laquelle la surface de ladite deuxième couche de particules est en contact sûr avec au moins une partie de ladite première surface adhésive, et dans laquelle la réflectivité de ladite au moins une couche d'au moins une couche de particules granulaires à réflectivité modérée est comprise entre 35 pour cent de réflectivité et moins de 55 pour cent de réflectivité sur une échelle de réflectivité standard, dans laquelle la réflectivité est mesurée en pourcentage de réflectance par un réflectomètre de 45/0 degrés.

19. Procédé de formation d'une membrane d'étanchéité en feuille, sous le niveau du sol, côté aveugle, avec adhésif et couche de particules granulaires à réflectivité modérée pour adhérer complètement au béton/béton projeté, comprenant les étapes suivantes :
(a) prendre la membrane d'étanchéité en feuille avec adhésif et couche de particules granulaires à réflectivité modérée de l'une des revendications 1 à 17, et la placer contre au moins une structure, de telle sorte que ladite seconde surface de membrane de ladite au moins une membrane en feuille soit en contact physique avec ladite au moins une structure, et dans laquelle ladite première surface de couche de particules de ladite au moins une couche d'au moins une couche de particules granulaires à réflectivité modérée est exposée ; et
(b) appliquer au moins une couche de béton ou de béton projeté sur au moins une partie de la surface de la première couche de particules de ladite au moins une couche de particules granulaires à réflectivité modérée.

20. Membrane d'étanchéité en feuille, sous le niveau du sol, côté aveugle, avec adhésif et couche de particules granulaires à réflectivité modérée pour adhérer complètement au béton/béton projeté des revendications 1 à 17, dans laquelle ladite au moins une membrane en feuille, ladite au moins une première couche adhésive et ladite au moins une couche d'au moins une couche de particules granulaires à réflectivité modérée a une épaisseur comprise entre 0,5 mm et 6,1 mm.
